# FASCICULE DE BREVET EUROPEEN

(11) **EP 3 446 115 B1**
(45) Date de publication et mention de la délivrance du brevet: **04.03.2026**
(21) Numéro de dépôt: 17725300.2
(22) Date de dépôt: 21.04.2017
(51) Int. Cl.: G01N 29/04, G01N 29/06, G01N 29/24, G01N 29/50

(54) **SYSTEME ET PROCEDE DE CONTROLE D'UNE STRUCTURE PAR ONDES ACOUSTIQUES DE CODA**
SYSTEM UND VERFAHREN ZUR INSPEKTION EINER STRUKTUR MIT CODASCHALLWELLEN
SYSTEM AND METHOD FOR INSPECTING A STRUCTURE WITH CODA ACOUSTIC WAVES

(30) Priorité: 21.04.2016 FR 1653518
(43) Date de publication de la demande: 27.02.2019
(73) Titulaire: Safran, 75015 Paris (FR)
(72) Inventeur: DUCOUSSO, Mathieu Loïc, 77550 Moissy-Cramayel (FR)
(74) Mandataire: Gevers & Orès
(86) Numéro de dépôt international: PCT/FR2017/050946
(87) Numéro de publication internationale: WO 2017/182761

(56) Documents cités:
- GB-A- 2 383 413
- T. PLANÈS ET AL: "A review of ultrasonic Coda Wave Interferometry in concrete", CEMENT AND CONCRETE RESEARCH., vol. 53, 1 November 2013 (2013-11-01), US, pages 248 - 255, XP055391323, ISSN: 0008-8846, DOI: 10.1016/j.cemconres.2013.07.009
- ERIC LAROSE ET AL: "Reconstruction of Rayleigh-Lamb dispersion spectrum based on noise obtained from an air-jet forcing", ARXIV.ORG, CORNELL UNIVERSITY LIBRARY, 201 OLIN LIBRARY CORNELL UNIVERSITY ITHACA, NY 14853, 1 October 2007 (2007-10-01), XP080304225, DOI: 10.1121/1.2799913
- LAROSE ERIC ET AL: "Locating a small change in a multiple scattering environment", APPLIED PHYSICS LETTERS, A I P PUBLISHING LLC, US, vol. 96, no. 20, 19 May 2010 (2010-05-19), pages 204101 - 204101, XP012131285, ISSN: 0003-6951, DOI: 10.1063/1.3431269

## Description

### Domaine de l'invention :

La présente invention se rapporte au domaine du contrôle non destructif de structures, qu'elles soient monolithiques ou par assemblage, utilisant la propagation d'ondes acoustiques au sein de la structure.

### Etat de la technique :

La conception industrielle de structures, qu'elles soient monolithiques ou par assemblage, notamment en aéronautique, nécessite souvent une opération de contrôle non destructif de la structure. Le contrôle non destructif permet au concepteur de vérifier la conformité du produit qu'il a conçu au niveau de défauts internes susceptibles de s'être formés lors de la fabrication et d'en altérer la disponibilité ou la sécurité. Ce besoin est d'ailleurs aussi présent pour l'utilisateur, qui veut s'assurer de la bonne santé d'une pièce ou d'une structure au cours de sa vie opérationnelle.

Les méthodes à ultrasons font partie des méthodes de contrôle non destructif les plus utilisées. Ces méthodes permettent d'inspecter des pièces, même opaques.

Il existe différents moyens d'inspecter la pièce en particulier, des moyens d'inspection bidimensionnelle et tridimensionnelle.

Un exemple de moyen d'inspection bidimensionnelle est décrit dans le document GB-A-2383413 dans lequel une onde de surface, et en particulier une onde de Rayleigh est générée dans un rail de structure infinie suivant une direction longitudinale au moyen d'un ou de plusieurs transducteur(s). Des récepteurs placés de manière déterminée le long du rail permettent de localiser les défauts à la surface ou à proximité de la surface du rail.

Les moyens d'inspection tridimensionnelle permettent d'évaluer une structure dans son volume. Dans la grande majorité des situations, les ultrasons sont utilisés sur un moyen automatisé permettant de mettre en œuvre un procédé d'imagerie C-Scan.

Le procédé d'imagerie C-Scan permet d'imager la propagation d'ondes acoustiques envoyées dans le volume de la pièce à partir de la surface. Dans ce procédé, un transducteur balaye la surface de la pièce et une acquisition acoustique est réalisée point par point sur l'ensemble de cette surface. Une représentation bidimensionnelle des caractéristiques tridimensionnelles de la pièce est alors réalisée.

Ce procédé permet un positionnement aisé des éventuelles indications présentes au sein de la pièce. La méthode est extrêmement robuste en environnement industriel, ce qui a justifié son utilisation à grande échelle.

Cependant, dans la plupart des cas, ce procédé nécessite d'immerger ou, du moins, de mouiller la structure inspectée, ce qui peut impliquer une opération préliminaire de protection contre l'eau et une opération de séchage en étuve, après le contrôle. Ces opérations ont un coût. De plus, pour des structures de grandes dimensions, les moyens de contrôle utilisant des transducteurs pour mettre en œuvre le procédé C-Scan doivent être conçus à l'échelle correspondante et peuvent donc représenter un coût élevé.

On peut envisager des méthodes à l'aide d'interférométrie laser pour réaliser le procédé C-Scan, qui peuvent s'affranchir de certaines limitations liées aux transducteurs, notamment les opérations pré et post contrôle. Cependant, le procédé nécessite une acquisition acoustique point par point et pour des structures de grandes dimensions, cela implique donc un grand nombre de mesures. Ce contrôle peut donc s'avérer lent.

Il existe donc un besoin de trouver un moyen d'utiliser un procédé de contrôle non destructif de structures pour des besoins industriels, utilisant les ultrasons en conservant tous leurs avantages mais en remédiant aux limitations évoquées ci-dessus.

### Exposé de l'invention :

A cet effet, l'invention concerne un système destiné à contrôler une structure par ondes acoustiques de CODA, selon la revendication 1.

L'indication de l'éventuel défaut est de préférence une indication de sa localisation. Elle peut comporter en outre des éléments caractérisant le type de défaut, ou sa taille.

L'impulsion acoustique comporte de préférence une énergie importante dans une bande de fréquences ultrasonores susceptibles de se propager dans la structure.

L'invention permet en particulier, avec des moyens de mesures répartis sur la surface S et sans contact, d'effectuer directement une caractérisation globale de la structure, soit au sein du volume de la structure pour y repérer d'éventuels défauts au moyen des ondes acoustiques de CODA et sans avoir à préparer les surfaces correspondant aux différents points de mesure. Cette absence de contrainte sur l'ensemble des points de mesure permet d'envisager une réduction drastique du coût de l'appareillage du système de contrôle acoustique non destructif et aussi de réduire le nombre d'opérations de préparation ou de remise en condition de la structure contrôlée. De plus, les ondes acoustiques de CODA dans la présente invention sont des ondes de CODA de structure à la différence des ondes de surface telles que décrites dans le document GB-A-2383413. L'onde de CODA se réfléchit de manière indéterminée et de manière tridimensionnelle pour avoir un « état de santé » ou une information détaillée du volume de la structure.

De préférence, lesdits moyens d'excitation sont aussi agencés pour effectuer l'excitation dans l'air et sans contact avec la structure.

Cela permet de supprimer complètement les contacts avec la structure lors des opérations de contrôle.

Suivant une caractéristique de l'invention, le signal des ondes acoustiques de CODA est compris entre 200kHz et 1000kHz.

Suivant une autre caractéristique de l'invention, les moyens générateur d'excitation comprennent un générateur de jet d'air comprimé.

De préférence, lesdits moyens de mesure sont du type interférométrie laser.

Lesdits moyens de mesure comportent un système optique agencé pour diriger un rayon laser donné vers les différents points de mesure.

Un tel système permet d'ajuster la position des points de mesure avec un seul laser. Il permet aussi de régler la position des points de mesure sur la surface S pour affiner la localisation d'un défaut.

Le système de contrôle acoustique peut comporter en outre des moyens de contrôle ultrasonore du type C-Scan agencés pour être mis en œuvre sur la structure à proximité d'un défaut éventuel.

L'invention concerne également un procédé de contrôle d'une structure par ondes acoustiques de CODA, selon la revendication 7.

De préférence, dans l'étape a), l'excitation acoustique de la structure est effectuée sans mettre en contact un appareil d'excitation avec la structure.

Suivant une caractéristique du procédé, le signal des ondes acoustiques de CODA est compris entre 200kHz et 1000kHz.

Avantageusement, dans l'étape b), les mesures sont effectuées en mettant en œuvre une méthode d'interférométrie laser.

Suivant une autre caractéristique, l'appareil de mesure effectue une triangulation des trois points de mesure.

Suivant encore une autre caractéristique, l'appareil de mesure effectue un balayage des points de mesure.

Le procédé peut comporter, en outre, lorsqu'un éventuel défaut est localisé, une étape complémentaire consistant à définir au moins trois nouveaux points de mesure sur la surface donnée, plus proches dudit défaut que chacun des points de mesure utilisés précédemment, et une nouvelle séquence de réalisation des étapes a), b) et c), en utilisant lesdits nouveaux points de mesure.

Cette séquence permet d'affiner la localisation d'un éventuel défaut.

Avantageusement, le procédé peut également comporter, en outre, la mise en œuvre d'une méthode de contrôle ultrasonore du type C-Scan sur la structure à proximité d'un défaut éventuel.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 représente schématiquement une première variante de la méthode de mesure par ondes acoustiques de CODA utilisée dans l'invention ;
- la figure 2 représente schématiquement une deuxième variante de la méthode de mesure par ondes acoustiques de CODA utilisée dans l'invention ;
- la figure 3 présente schématiquement un banc d'essais selon l'invention avec la structure à contrôler ;
- les figures 4a, 4b et 4c représentent schématiquement trois séquences d'un procédé selon l'invention, mis en œuvre avec le banc de mesure de la figure 3 ; et
- la figure 5 présente un organigramme d'un procédé selon l'invention.

### Description d'un mode de réalisation :

Un système de contrôle acoustique selon l'invention utilise la propagation d'une onde acoustique de CODA ou CODA ultrasonore, selon une méthode dont on rappelle tout d'abord très brièvement les principales caractéristiques.

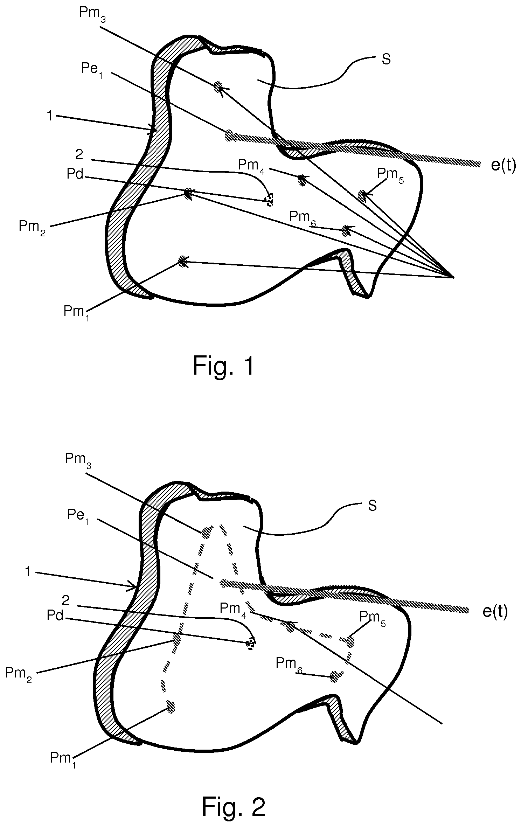

En référence à la Figure 1, la CODA ultrasonore permet de définir une méthode qui s'applique à une structure 1 que l'on contrôle pour déceler la présence éventuelle d'un ou plusieurs défauts, préférentiellement en les caractérisant. Un défaut 2, tel que celui indiqué sur la figure 1 peut être confiné à l'intérieur de la structure 1 et donc être indécelable visuellement. La méthode permet d'effectuer ce contrôle à partir de mesures faites sur une seule surface S accessible de ladite structure 1.

Lorsqu'une excitation e(t) est appliquée à la structure 1, par exemple, en un point Pe₁, les premières ondes acoustiques arrivant en un point Pmᵢ, i= 1 à 6 sur la figure 1, de la surface S sont des ondes de volume ou des ondes de surface qui ont eu un trajet, soit direct, soit avec un faible nombre de réflexions. Les ondes qui arrivent plus tard sont multiplement diffusées en raison de la complexité de la structure 1, leurs trajectoires sont longues et complexes. En d'autres termes, les ondes de CODA se propagent de manière indéterminée au sein du volume de la structure.

Si l'on mesure les vibrations hᵢ(t) de la surface S au point Pmᵢ, la dernière partie du signal hᵢ(t) correspond à ces ondes multiplement diffusées, appelées ondes de CODA. Le signal de la CODA a les apparences d'un bruit. Cependant, ce signal de CODA ultrasonore hᵢ(t) présente deux caractéristiques particulières. Premièrement, il est extrêmement reproductible pour une excitation donnée e(t). Deuxièmement, il est très sensible aux défauts ou perturbations du matériau de la structure 1, notamment en ce qui concerne l'amplitude et le décalage en temps.

Le signal de CODA ultrasonore peut donc être utilisé pour repérer des défauts dans une structure. Des méthodes connues ont été mises au point, par exemple pour des structures en béton, qui permettent de localiser et de caractériser des défauts sur des structures in situ à partir de mesures de vibrations acoustiques en plusieurs points de la surface de ces structures. Ces méthodes s'appuient sur des théories de propagation du signal de CODA ultrasonore qui permettent, en utilisant soit un modèle théorique de la structure soit des comparaisons avec des mesures sur une structure de référence, de repérer d'éventuels défauts dans le volume de la structure. En répartissant les points de mesures Pmᵢ, il est par exemple possible de faire des triangulations entre ces points pour localiser un défaut.

Il est apparu par ailleurs que ces méthodes, ne s'appuyant pas sur une théorie linéaire, comme par exemple la technologie C-Scan, sont particulièrement adaptées à des structures complexes et/ou à l'identification de défauts qui ne présentent pas une réponse linéaire aux ondes acoustiques.

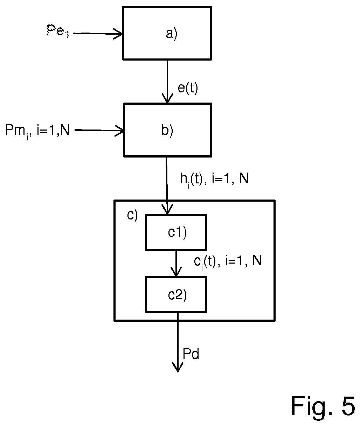

En référence à la figure 1 et à la figure 5, un exemple de méthode utilise, dans une première étape a), une excitation calibrée e(t) en un point Pe₁ donné de la surface S. Pour de multiples raisons, le signal de CODA se situe plutôt dans les ultrasons, généralement entre 200kHz et 1000kHz, ou éventuellement entre 200Hz et 1000Hz, d'où le nom de CODA ultrasonore. L'excitation e(t) doit donc comporter suffisamment d'énergie dans la bande de fréquences des ultrasons propagés par la structure 1.

Dans une deuxième étape b), les vibrations de la surface S au cours du temps en une série de points Pmᵢ, i= 1 à N, répartis sur la surface S sont effectuées après le déclenchement de l'excitation e(t). La répartition des points Pm₁-Pm_{N} est alors définie de manière à observer une partie du volume de la structure où des défauts éventuels risquent d'exister. Sur la figure 1, le nombre N de points de mesure Pmᵢ est égal à 6. Cependant, ce n'est qu'un exemple. Ce nombre et la répartition dépendront de la complexité de la structure. De préférence, le nombre N est au moins égal à 3 pour faire des triangulations.

Une troisième étape c), de traitement du signal exploite les mesures pour identifier un défaut 2 éventuel.

Elle comporte une première sous-étape c1), dans laquelle le signal hᵢ(t) fourni en chaque point de mesure Pmᵢ est traité pour en extraire le signal de CODA ultrasonore cᵢ(t).

Elle comporte ensuite une sous-étape c2), dans laquelle le signal de CODA ultrasonore cᵢ(t) aux différents points de mesure Pmᵢ est exploité en utilisant les théories précédemment évoquées pour indiquer un éventuel défaut 2, via une triangulation. Cette étape fournit par exemple une localisation Pd dudit défaut 2.

On notera que le signal de CODA ultrasonore contient de multiples informations, qui peuvent également permettre de caractériser le défaut 2 éventuel. En effet des trous ou des fissures n'ont pas la même réponse, linéaire ou non linéaire, aux ondes acoustiques.

En référence à la figure 2, la méthode précédente peut présenter une variante sur la façon de réaliser les deux premières étapes. En effet, comme le signal est très reproductible, on n'est pas obligé de faire toutes les mesures en même temps, donc d'avoir plusieurs moyens de mesure en parallèle. Un seul moyen de mesure peut balayer les points de mesure. On peut simuler la première variante en positionnant successivement l'appareil de mesure sur chacun des points de mesure Pm₁ à Pm_{N}, puis en reproduisant à chaque fois l'excitation e(t) et en effectuant la mesure pour le point en cours sur la même fenêtre temporelle par rapport à ladite excitation.

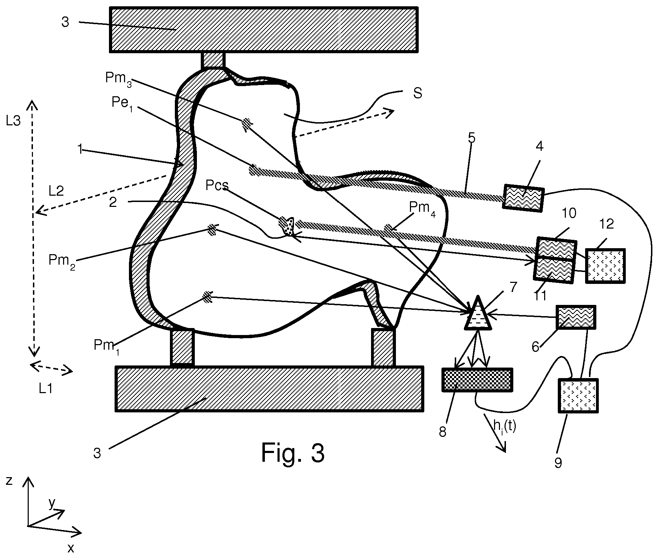

En référence à la figure 3, un système de contrôle selon l'invention est défini pour pouvoir contrôler une structure 1. La composition de la structure n'est pas détaillée sur la figure. La structure est par exemple une pièce d'un composant aéronautique comme un élément de nacelle. Elle peut être monolithique, par exemple en un matériau composite déterminé, ou être formée par assemblage, par exemple de plusieurs couches de matériaux différents ou de plusieurs pièces.

La structure 1 peut avoir une forme complexe. Elle présente des dimensions caractéristiques L1, L2, L3 respectivement dans les trois dimensions x, y, z de l'espace. En général, l'une d'elle est grande par rapport aux dimensions d'une zone de mesure accessible par des moyens de type C-Scan ultrasonore.

Comme cela a été évoqué plus haut, le contrôle peut s'effectuer sur la structure 1 in situ, c'est-à-dire, sur une pièce aéronautique installée dans une turbomachine, voire dans un aéronef. Le contrôle peut aussi s'effectuer sur la structure 1 seule. Dans ce deuxième cas, le système de contrôle comporte de préférence des moyens 3, représentés sur la figure 3, permettant de maintenir la structure dans des conditions reproductibles, si l'on veut faire un suivi de son état à différentes étapes d'utilisation.

Dans les deux cas, le contrôle s'effectue sur une structure 1 maintenue dans l'air ambiant, de préférence dans une pièce ou un bâtiment l'isolant de sollicitations acoustiques non maîtrisées.

La structure 1 positionnée pour le contrôle présente une surface S qui est, sur l'exemple, accessible suivant des directions ayant une composante principale dans la dimension x. Par ailleurs, le système de contrôle est configuré pour pouvoir repérer avec une bonne précision spatiale la position générale de la structure 1 et la localisation de points sur la surface S.

Le système de contrôle comporte ici un générateur 4 de jet d'air comprimé 5, placé en face de la surface S et agencé pour projeter un jet d'air comprimé sur un point Pe₁ déterminé de la surface S, dont les coordonnées sont, de préférence, connues.

Ledit générateur 4 est agencé pour que le jet d'air comprimé 5 engendre au point Pe₁ une excitation vibratoire de forme temporelle e(t) reproductible transférant de l'énergie dans un domaine de fréquences ultrasonores adapté à la structure 1. L'excitation créée au point Pe₁ par le jet d'air comprimé 5 du générateur 4 entraîne ainsi la propagation d'une CODA ultrasonore dans la structure 1.

Le générateur 4 de jet d'air comprimé 5 peut être positionné à distance de la structure, sans contact avec celle-ci, et être orienté de manière à modifier facilement la position du point d'excitation Pe₁. Il est également envisageable, selon un mode de réalisation non représenté, de disposer plusieurs générateurs de jet d'air comprimé actionnables simultanément et visant des points répartis sur la structure 1 pour lui transférer plus d'énergie.

Dans une variante de réalisation non représentée, le générateur 4 de jet d'air comprimé peut être remplacé par des haut-parleurs focalisant leur son vers le point Pe₁.

Dans une autre variante, qui n'est pas représentée non plus, ce peut être un générateur laser envoyant une impulsion laser, dans la mesure où cette impulsion n'endommage pas la structure 1.

Ces différentes variantes ont l'avantage d'être sans contact entre le dispositif d'excitation 4 et la structure 1. Il est cependant envisageable aussi de placer un transducteur piézo-électrique sur la surface S au point Pe₁ déterminé pour exciter la structure 1.

Le système de contrôle comporte également au moins un dispositif de mesure des vibrations de la surface S, préférentiellement par interférométrie laser.

Sur l'exemple de la figure 3, dans une première variante, le dispositif de mesure comporte un générateur laser 6 et le faisceau laser se propage dans l'air. Un dispositif optique 7, par exemple un système de miroirs, sépare le faisceau laser en plusieurs faisceaux impactant la surface S en N points de mesure Pm₁-Pm_{N}, déterminés, dont le nombre N est au moins égal à 3, en l'occurrence égal à 4 sur l'exemple de la figure 3.

Selon le principe de l'interférométrie laser, non illustré sur les figures, chacun des faisceaux envoyés vers un point Pmᵢ, i = 1 à N, est scindé en deux, l'un est réfléchi sur la structure 1, l'autre est réfléchi sur un miroir de référence et les deux faisceaux sont ensuite recombinés de manière à visualiser les déplacements de la surface inspectée au point Pmᵢ avec une résolution pouvant descendre au nanomètre. L'acquisition est faite dans un moyen d'acquisition 8 comportant autant de voies d'acquisition qu'il y a de points Pmᵢ visés par un faisceau laser. Ce système d'acquisition sort un signal hᵢ(t) de la mesure temporelle des déplacements normaux de la surface S en chaque point de mesure Pmᵢ.

Dans une première variante non représentée, le faisceau laser créé par le générateur laser 6 peut être guidé par des fibres optiques. Dans ce cas, il peut être divisé et suivre aussi plusieurs fibres optiques visant chacune un point de mesure Pmᵢ sur la surface S.

Dans une autre variante, le moyen d'acquisition 8 peut ne comporter qu'une seule voie d'acquisition. Dans ce cas, le dispositif de mesure est agencé pour que le faisceau laser sortant du dispositif optique 7 balaye successivement les points de mesures Pm₁ à Pm_{N} durant une fenêtre de temps déterminée après des excitations e(t) séparées, reproduites à l'identique après la mesure de la CODA ultrasonore des points précédents.

Le système de contrôle comporte également un calculateur électronique 9 agencé pour commander le(s) dispositif(s) d'excitation 4 et le dispositif de mesure 6-7-8. Avantageusement, ledit calculateur électronique 9 est agencé également pour extraire le signal de CODA ultrasonore cᵢ(t) de chacun des signaux hᵢ(t) transmis par le moyen d'acquisition 8 et pour exécuter les programmes de calcul permettant d'exploiter les signaux de CODA ultrasonore cᵢ(t), afin d'en déduire des localisations de défauts 2 éventuels dans la structure 1, voire de les caractériser.

Avantageusement, le système de contrôle comprend aussi un dispositif de mesure ultrasonore C-Scan dont le principe a été brièvement rappelé en introduction. Ce dispositif comprend un transducteur/enregistreur qui peut balayer une zone localisée de la structure autour d'un point Pcs de la surface S. Avantageusement, comme cela est représenté sur la figure 3, le transducteur/enregistreur peut être composé, comme pour le dispositif de mesure du signal de CODA ultrasonore, d'un générateur 10 d'impulsions acoustiques directionnelles sur le point Pcs de la surface S, par exemple de type générateur de jet, et d'un moyen de mesure 11 de la réponse acoustique réfléchie au point Pcs par interférométrie laser. Ce transducteur/enregistreur peut balayer une zone restreinte autour d'un point donné Pd de la surface S, de manière à fournir une image C-Scan du volume de la structure au niveau du défaut 2.

Eventuellement, bien que ce ne soit pas représenté, on peut positionner le transducteur/enregistreur 10-11 devant un point d'une autre surface, non représentée, de la structure 1, s'il s'avère que la zone de la structure 1 à inspecter est plus visible de cette autre surface par la méthode C-Scan.

Le transducteur/enregistreur 10-11 est par ailleurs relié à un calculateur 12 agencé pour effectuer le traitement du signal permettant d'obtenir l'image de la zone inspectée. Ce calculateur peut être le même que le calculateur 9.

Un procédé de contrôle d'une structure 1 avec le système qui vient d'être décrit peut comporter les étapes suivantes.

Dans une étape préliminaire, la structure 1 est correctement positionnée vis-à-vis du système de contrôle, dans une configuration déterminée, de manière à ce que la surface S soit accessible au générateur d'excitation 4, aux moyens de mesure à distance 6-7-8, et, éventuellement, au transducteur/enregistreur 10-11. Cette configuration peut correspondre soit à sa position d'utilisation dans un système global, tel qu'un aéronef, soit, comme c'est représenté sur la figure 3, à un maintien dans des moyens de maintien 3 dédiés au système de contrôle.

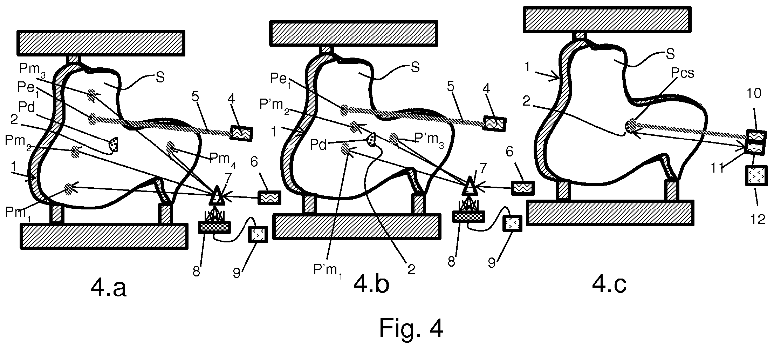

En référence aux figures 4a, 4b, 4c, le procédé peut comporter trois séquences.

Une première séquence, illustrée sur la figure 4a, consiste en la mise en œuvre des étapes d'une des deux variantes précédemment rappelées de la méthode par CODA ultrasonore.

Dans ces deux variantes, le générateur d'excitation 4 est utilisé pour envoyer une excitation donnée vers un point Pe1 de la surface S. Le Pe1 est en général choisi pour que l'énergie acoustique de l'excitation puisse rayonner dans la plus grande partie possible du volume de la structure, afin que les mesures soient exploitables.

Ici, la première variante, évoquée en relation avec la figure 1, utilise le générateur laser 6, le système optique 7 et les moyens d'acquisitions multivoies 8 pour réaliser simultanément les mesures sur les N points de mesure Pm₁-PM_{N}, et ainsi effectuer les étapes a) et b) de la méthode décrite précédemment.

Dans une alternative, non décrite, le système de contrôle pourrait utiliser plusieurs systèmes de mesure laser indépendants moins complexes. De même, si l'on se limite à un système de mesure laser moins complexe capable de faire une mesure point par point, on peut appliquer la deuxième variante de la méthode, qui a été évoquée en relation avec la figure 2.

Il est également possible de combiner les deux variantes, en groupant les points de mesure par sous-ensembles et en effectuant des successions de mesures simultanées sur chacun des sous-ensembles.

La suite de la séquence est constituée par du traitement de signal correspondant à l'étape c) de la méthode décrite précédemment, qui est effectué dans le calculateur 9 pour localiser, voire caractériser, un éventuel défaut 2.

Si la structure est de très grandes dimensions, on peut aménager les deux variantes de cette première séquence. Dans ce cas, non représenté, le système de contrôle acoustique comporte plusieurs générateurs d'excitation acoustique semblables à celui 4 qui est représenté. Alors chacun des générateurs d'excitation est orienté vers un point Pei différent de la surface S, de manière à avoir plusieurs sources d'excitation pour transférer suffisamment d'énergie acoustique à la structure 1. Parallèlement, on pourra augmenter le nombre N de points de mesure pour couvrir de manière régulière la surface S.

Si à la fin de cette séquence, aucun défaut n'a été détecté ou si l'on considère que le ou les défauts 2 détectés sont suffisamment bien localisés et caractérisés, le procédé peut s'arrêter.

Si on considère qu'il est nécessaire de mieux localiser un défaut 2 repéré au cours de la première séquence, il est possible d'engager une deuxième séquence.

Pour cette deuxième séquence, comme illustré sur la figure 4b, on redéfinit un ensemble de N' (N' égal 3 sur l'exemple) points de mesure P'mi, en les rapprochant de la position Pd estimée du défaut 2, de manière à améliorer la précision des algorithmes utilisés dans la localisation du défaut 2 par exploitation de la CODA ultrasonore, lors de la sous-étape c1), évoquée en relation avec la figure 5.

La deuxième séquence se déroule alors comme la première séquence par exploitation de la CODA ultrasonore, en utilisant le nouvel ensemble de points de mesure P'm₁-P'm_{N'}.

Si on considère, soit après la première séquence, soit après la deuxième séquence, que le défaut 2 doit être mieux caractérisé ou mieux localisé en profondeur par rapport à la surface S, il est aussi possible d'appliquer une troisième séquence.

Dans cette troisième séquence, on utilise le transducteur/enregistreur pour effectuer une imagerie C-Scan autour d'un point Pcs de la surface S localisé au-dessus de la zone où se trouve le défaut. Cette séquence permet alors de visualiser le défaut 2 avec des moyens différents de la méthode par CODA ultrasonore et dont l'interprétation est bien rôdée. Elle permet donc d'améliorer la caractérisation du défaut 2.

## Revendications

1. Système destiné à contrôler une structure (1) par ondes acoustiques de CODA, à partir d'une surface (S) donnée accessible de l'extérieur de la structure, ledit système comportant :
- des moyens générateur d'excitation (4) agencés pour exciter acoustiquement ladite structure (1) en au moins un point d'excitation (Pe₁) déterminé de la surface (S) donnée par une impulsion acoustique (e(t)) de forme déterminée,
- au moins un moyen de mesure (6, 7, 8) agencé pour mesurer des vibrations (hᵢ(t)) en au moins trois points de mesure (Pmᵢ) déterminés sur la surface (S) donnée, pendant une fenêtre temporelle déterminée par rapport à l'impulsion acoustique (e(t)), le moyen de mesure (6, 7, 8) étant agencé pour effectuer les mesures dans l'air et sans contact avec la structure (1),
- des moyens électroniques (9) agencés pour exploiter les mesures de vibrations (hᵢ(t)) fournies par ledit moyen de mesure (6, 7, 8) afin de définir une indication (Pd) dans ladite structure d'au moins un éventuel défaut (2) en extrayant des vibrations (hᵢ(t)) mesurées un signal des ondes acoustiques de CODA (cᵢ(t)) de structure en chacun desdits points de mesure (Pmᵢ),
ledit système étant **caractérisé en ce que** le signal extrait des ondes acoustiques de CODA (cᵢ(t)) est compris entre 200kHz et 1000kHz et **en ce que** les moyens électroniques (9) sont agencés pour exploiter le signal de CODA (cᵢ(t)) aux différents points de mesure (Pmᵢ) via une triangulation.

2. Système selon la revendication précédente, **caractérisé en ce que** lesdits moyens d'excitation (4) sont agencés pour effectuer l'excitation (e(t)) dans l'air et sans contact avec la structure (1).

3. Système selon l'une quelconque des revendications précédentes, **caractérisé en ce que** les moyens générateur d'excitation (4) comprennent un générateur de jet d'air comprimé.

4. Système selon l'une quelconque des revendications précédentes, **caractérisé en ce que** ledit moyen de mesure (6, 7, 8) est du type interférométrie laser.

5. Système selon la revendication précédente, **caractérisé en ce que** ledit moyen de mesure comporte un système optique (7) agencé pour diriger un rayon laser (6) donné vers les différents points de mesure (Pmᵢ).

6. Système selon l'une quelconque des revendications précédentes, comportant en outre des moyens de contrôle ultrasonore (10, 11, 12) du type C-Scan agencés pour être mis en œuvre sur la structure (1) à proximité (Pcs) d'un défaut éventuel (2).

7. Procédé de contrôle d'une structure (1) par ondes acoustiques de CODA, à partir d'une surface (S) donnée, accessible de l'extérieur de la structure, ledit procédé comportant :
- une étape a) d'excitation acoustique de ladite structure (1) en au moins un point d'excitation (Pe₁) déterminé de la surface (S) donnée par une impulsion acoustique (e(t)) de forme déterminée,
- une étape b) de mesure des vibrations (hᵢ(t)) de la structure (1) en au moins trois points de mesure (Pmᵢ) déterminés sur la surface (S) donnée, pendant une fenêtre temporelle déterminée après l'impulsion acoustique (e(t)), les mesures étant effectuées sans mettre en contact un appareil de mesure avec la structure (1),
- une étape c) d'exploitation des mesures des vibrations (hᵢ(t)) de la structure (1) afin de définir une indication d'au moins un défaut (2) éventuel dans ladite structure, un signal des ondes acoustiques de CODA (cᵢ(t)) de structure étant extrait des vibrations (hᵢ(t)) en chacun desdits points de mesure (Pmᵢ),
ledit procédé étant **caractérisé en ce que** le signal des ondes acoustiques de CODA (cᵢ(t)) est compris entre 200kHz et 1000kHz et **en ce que** le signal de CODA (cᵢ(t)) est exploité par l'appareil de mesure aux différents points de mesure (Pmᵢ) via une triangulation.

8. Procédé selon la revendication précédente, **caractérisé en ce que**, dans l'étape a), l'excitation acoustique (e(t)) de la structure (1) est effectuée sans mettre en contact un appareil d'excitation avec la structure.

9. Procédé selon l'une quelconque des revendications 7 et 8, **caractérisé en ce que**, dans l'étape b), les mesures sont effectuées en mettant en œuvre une méthode d'interférométrie laser.

10. Procédé selon l'une quelconque des revendications 7 à 9, **caractérisé en ce que** l'appareil de mesure effectue un balayage des points de mesure (Pmᵢ).

11. Procédé selon l'une quelconque des revendications 7 à 10, comportant en outre, lorsqu'un éventuel défaut (2) est localisé, une étape complémentaire consistant à définir au moins trois nouveaux points de mesure (P'm₁ -P'm₄) sur la surface (S) donnée, plus proches dudit défaut (2) que chacun des points de mesure (Pm₁ - Pm₆) utilisés précédemment, et une nouvelle séquence de réalisation des étapes a), b) et c), en utilisant lesdits nouveaux points de mesure (P'm₁ -P'm₄).

12. Procédé selon l'une des revendications 7 à 11, comportant en outre la mise en œuvre d'une méthode de contrôle ultrasonore du type C-Scan sur la structure à proximité (Pcs) d'un défaut (2) éventuel.

## Patentansprüche

1. System, das dazu bestimmt ist, eine Struktur (1) durch CODA-Schallwellen aus einer gegebenen Oberfläche (S) zu kontrollieren, die von außerhalb der Struktur zugänglich ist, wobei das System umfasst:
- Erregungserzeugungsmittel (4), die angeordnet sind, um die Struktur (1) an mindestens einer bestimmten Erregungsstelle (Pe₁) der gegebenen Oberfläche (S) durch einen Schallimpuls (e(t)) einer bestimmten Form anzuregen,
- mindestens ein Messmittel (6, 7, 8), das angeordnet ist, um Schwingungen (hᵢ(t)) an mindestens drei bestimmten Messstellen (Pmᵢ) auf der gegebenen Oberfläche (S) während eines bestimmten Zeitfensters in Bezug auf den Schallimpuls (e(t)) zu messen, wobei das Messmittel (6, 7, 8) angeordnet ist, um die Messungen in der Luft und ohne Berührung der Struktur (1) durchzuführen,
- Elektronikmittel (9), die angeordnet sind, um die von dem Messmittel (6, 7, 8) bereitgestellten Schwingungsmessungen (hᵢ(t)) zu nutzen, um eine Angabe (Pd) in der Struktur mindestens eines eventuellen Fehlers (2) durch Extrahieren aus den gemessenen Schwingungen (hᵢ(t)) eines Signals der CODA-Schallwellen (cᵢ(t)) einer Struktur an jeder der Messstellen (Pmᵢ) zu definieren,
wobei das System **dadurch gekennzeichnet ist, dass** das aus den CODA-Schallwellen (cᵢ(t)) extrahierte Signal zwischen 200kHz und 1000kHz beträgt, und dadurch, dass die Elektronikmittel (9) angeordnet sind, um das CODA-Signal (cᵢ(t)) an den verschiedenen Messstellen (Pmᵢ) über eine Dreiecksaufnahme zu nutzen.

2. System nach dem vorstehenden Anspruch, **dadurch gekennzeichnet, dass** die Erregungsmittel (4) angeordnet sind, um die Erregung (e(t)) in der Luft und ohne Berührung der Struktur (1) durchzuführen.

3. System nach einem der vorstehenden Ansprüche, **dadurch gekennzeichnet, dass** die Erregungserzeugungsmittel (4) einen Druckluftstrahlgenerator umfassen.

4. System nach einem der vorstehenden Ansprüche, **dadurch gekennzeichnet, dass** das Messmittel (6, 7, 8) in der Art eines Laserinterferometers ist.

5. System nach dem vorstehenden Anspruch, **dadurch gekennzeichnet, dass** das Messmittel ein optisches System (7) umfasst, das angeordnet ist, um einen gegebenen Laserstrahl (6) zu den verschiedenen Messstellen (Pmᵢ) zu leiten.

6. System nach einem der vorstehenden Ansprüche, das weiter Ultraschallkontrollmittel (10, 11, 12) in der Art C-Scan umfasst, die angeordnet sind, um auf der Struktur (1) in der Nähe (Pcs) eines eventuellen Fehlers (2) umgesetzt zu werden.

7. Verfahren zur Kontrolle einer Struktur (1) durch CODA-Schallwellen aus einer gegebenen Oberfläche (S), die von außerhalb der Struktur zugänglich ist, wobei das Verfahren umfasst:
- einen Schritt a) zum akustischen Erregen der Struktur (1) an mindestens einer bestimmten Erregungsstelle (Pe₁) der gegebenen Oberfläche (S) durch einen Schallimpuls (e(t)) einer bestimmten Form,
- einen Schritt b) zum Messen der Schwingungen (hᵢ(t)) der Struktur (1) an mindestens drei bestimmten Messstellen (Pmᵢ) auf der gegebenen Oberfläche (S) während eines bestimmten Zeitfensters nach dem Schallimpuls (e(t)), wobei die Messungen durchgeführt werden, ohne ein Messgerät mit der Struktur (1) in Berührung zu bringen,
- einen Schritt c) zum Nutzen der Schwingungsmessungen (hᵢ(t)) der Struktur (1), um eine Angabe mindestens eines eventuellen Fehlers (2) in der Struktur zu definieren, wobei ein Signal der CODA-Schallwellen (cᵢ(t)) einer Struktur aus den gemessenen Schwingungen (hᵢ(t)) an jeder der Messstellen (Pmᵢ) extrahiert wird,
wobei das Verfahren **dadurch gekennzeichnet ist, dass** das Signal der CODA-Schallwellen (cᵢ(t)) zwischen 200kHz und 1000kHz beträgt, und dadurch, dass das CODA-Signal (cᵢ(t)) von dem Messgerät an den verschiedenen Messstellen (Pmᵢ) über eine Dreiecksaufnahme genutzt wird.

8. Verfahren nach dem vorstehenden Anspruch, **dadurch gekennzeichnet, dass** im Schritt a), die Schallerregung (e(t)) der Struktur (1) durchgeführt wird, ohne ein Erregungsgerät mit der Struktur in Berührung zu bringen.

9. Verfahren nach einem der Ansprüche 7 und 8, **dadurch gekennzeichnet, dass** im Schritt b) die Messungen durch Umsetzen eines Laserinterferometrie-Verfahrens umgesetzt werden.

10. Verfahren nach einem der Ansprüche 7 bis 9, **dadurch gekennzeichnet, dass** das Messgerät eine Abtastung der Messstellen (Pmᵢ) durchführt.

11. Verfahren nach einem der Ansprüche 7 bis 10, das weiter, wenn ein eventueller Fehler (2) lokalisiert wird, einen ergänzenden Schritt umfasst, der darin besteht, mindestens drei neue Messstellen (P'm₁ -P'm₄) auf der gegebenen Oberfläche (S) zu definieren, die dem Fehler (2) näher sind, als jede der zuvor verwendeten Messstellen (Pm₁ -Pm₆), und eine neue Durchführungsabfolge der Schritte a), b) et c), unter Verwendung der neuen Messstellen (P'm₁ -P'm₄).

12. Verfahren nach einem der Ansprüche 7 bis 11, das weiter das Umsetzen eines Ultraschallkontrollverfahrens in der Art C-Scan auf der Struktur in der Nähe (Pcs) eines eventuellen Fehlers (2) umfasst.

## Claims

1. A system for testing a structure (1) using CODA acoustic waves, from a given surface (S) accessible from outside the structure, said system comprising:
- excitation generator means (4) arranged to acoustically excite said structure (1) in at least one excitation point (Pe₁) determined on the given surface (S) by an acoustic pulse (e(t)) of a determined shape,
- at least one measuring means (6, 7, 8) arranged to measure vibrations (hᵢ(t)) in at least three measurement points (Pmᵢ) determined on the given surface (S), during a time window determined in relation to the acoustic pulse (e(t)), the measuring means (6, 7, 8) being arranged to perform the measurements in air and without contact with the structure (1),
- electronic means (9) arranged to exploit the vibration measurements (hᵢ(t)) provided by said measuring means (6, 7, 8) in order to define an indication (Pd) in said structure of at least one possible defect (2) by extracting from the measured vibrations (hᵢ(t)) a signal of the CODA acoustic waves (cᵢ(t)) of the structure at each of said measurement points (Pmᵢ),
said system being **characterized in that** the signal extracted from the CODA acoustic waves (cᵢ(t)) is between 200 kHz and 1000 kHz and **in that** the electronic means (9) are arranged to exploit the CODA signal (cᵢ(t)) at the different measurement points (Pmᵢ) via triangulation.

2. The system according to the preceding claim, **characterized in that** said excitation means (4) are arranged to perform excitation (e(t)) in the air and without contact with the structure (1).

3. The system according to any one of the preceding claims, **characterized in that** the excitation generator means (4) comprise a compressed air jet generator.

4. The system according to any one of the preceding claims, **characterized in that** said measuring means (6, 7, 8) is of the laser interferometry type.

5. The system according to the preceding claim, **characterized in that** said measuring means comprises an optical system (7) arranged to direct a given laser beam (6) towards the various measurement points (Pmᵢ).

6. The system according to any one of the preceding claims, further comprising ultrasonic testing means (10, 11, 12) of the C-Scan type arranged to be used on the structure (1) in the vicinity (Pcs) of a possible defect (2).

7. A method for inspecting a structure (1) using CODA acoustic waves, from a given surface (S) accessible from outside the structure, said method comprising:
- a step a) of acoustically exciting said structure (1) in at least one excitation point (Pe₁) determined on the given surface (S) by an acoustic pulse (e(t)) of a determined shape,
- a step b) of measuring the vibrations (hᵢ(t)) of the structure (1) in at least three measurement points (Pmᵢ) determined on the given surface (S), during a determined time window after the acoustic pulse (e(t)), the measurements being carried out without bringing a measuring device into contact with the structure (1),
- a step c) of using the measurements of the vibrations (hᵢ(t)) of the structure (1) in order to define an indication of at least one possible defect (2) in said structure, a signal of the CODA acoustic waves (cᵢ(t)) of the structure being extracted from the vibrations (hᵢ(t)) at each of said measurement points (Pmᵢ),
said method being **characterized in that** the CODA acoustic wave signal (cᵢ(t)) is between 200 kHz and 1000 kHz and **in that** the CODA signal (a(t)) is used by the measuring device at the various measurement points (Pmᵢ) via triangulation.

8. The method according to the preceding claim, **characterized in that**, in step a), the acoustic excitation (e(t)) of the structure (1) is performed without bringing an excitation device into contact with the structure.

9. The method according to any one of claims 7 and 8, **characterized in that**, in step b), the measurements are performed using a laser interferometry method.

10. The method according to any one of claims 7 to 9, **characterized in that** the measuring device scans the measurement points (Pmᵢ).

11. The method according to any one of claims 7 to 10, further comprising, when a possible defect (2) is located, an additional step consisting in defining at least three new measurement points (P'm₁ -P'm₄ ) on the given surface (S), closer to said defect (2) than each of the measurement points (Pm₁ -Pm₆) used previously, and a new sequence of steps a), b) and c), using said new measurement points (P'm₁ -P'm₄ ).

12. The method according to one of claims 7 to 11, further comprising the implementation of a C-Scan type ultrasonic testing method on the structure in the vicinity (Pcs) of a possible defect (2).
